Europäisches Patentamt

European Patent Office

Office européen des brevets

(11) Veröffentlichungsnummer: **0 295 382**
**A2**

(12) **EUROPÄISCHE· PATENTANMELDUNG**

(21) Anmeldenummer: **88105941.4**

(22) Anmeldetag: **14.04.88**

(51) Int. Cl.4: **B65G 47/14 , B23Q 7/12**

(30) Priorität: **14.05.87 DE 3716090**

(43) Veröffentlichungstag der Anmeldung:
**21.12.88 Patentblatt 88/51**

(84) Benannte Vertragsstaaten:
**AT BE CH ES FR GB IT LI NL SE**

(71) Anmelder: **EXPERT Maschinenbau GmbH**
**Seehofstrasse 56-58**
**D-6143 Lorsch(DE)**

(72) Erfinder: **Schmidt, Heinz**
**Fliederweg 4**
**D-6141 Einhausen(DE)**

(74) Vertreter: **Helber, Friedrich G., Dipl.-Ing. et al**
**Giesser Weg 47**
**D-6144 Zwingenberg(DE)**

(54) **Vorrichtung zur Vereinzelung, Sortierung und lagerichtig ausgerichteten Weiterförderung von Werkstücken.**

(57) Vorrichtung zur Vereinzelung, Sortierung und lagerichtigen Weiterförderung von mit Köpfen versehenen bolzen- oder schaftförmigen Werkstücken. Die Vorrichtung (10) weist einen die Werkstücke in ungeordneter Schüttung aufnehmenden Vorratsbehälter mit trichterartig geneigt verlaufenden Wänden (22; 24) und einer Durchlaßöffnung (30) an seiner tiefsten Stelle auf. Unter dem Vorratsbehälter (12) ist eine Dosiereinrichtung (14) angeordnet, auf welche die aus der Durchlaßöffnung (30) austretenden Werkstücke aufgegeben und mengendosiert zu einer Abgaberutsche (48) weitergefördert werden. Unter der Abgaberutsche (48) der Dosiereinrichtung (14) ist eine Sortiereinrichtung (16) in Form einer langgestreckten rinnenartigen Sortierwanne (54) mit seitlich gegenüberliegenden, in Abwärtsrichtung schräg geneigt aufeinanderzulaufenden Wänden (56) vorgesehen, welche an der Unterseite in einen von seitlichen parallelen Wänden (60) begrenzten Schlitz (58) übergehen, dessen lichte Breite etwa gleich dem Durchmesser des bolzenförmigen Schafts der Werkstücke ist, und welche zwischen zwei gegensinnig - schräg geneigten Stellungen um eine quer zu ihrer Längserstreckung verlaufende Achse (64) verschwenkbar ist. Der an seinem einen stirnseitigen Ende offen mündende Schlitz (58) ist in der ersten Schwenkstellung fluchtend mit einer nachgeschalteten Förderrutsche (62) ausgerichtet, auf welche die mit ihren Schäften in den Schlitz (58) einsortierten Werkstücke übertreten.

FIG.1

## Vorrichtung zur Vereinzelung, Sortierung und lagerichtig ausgerichteten Weiterförderung von Werkstücken

Die Erfindung betrifft eine Vorrichtung zur Vereinzelung, Sortierung und lagerichtigen Weiterförderung von mit Köpfen versehenen bolzen- oder -schaftförmigen Werkstücken.

Bei der Serienfertigung von komplexen technischen Produkten, z.B. bei der Montage von Kraftfahrzeugen an einer Montagestraße, stellt sich häufig die Aufgabe, mittels druckluftgetriebener oder elektrischer Schrauber gleichartige Schrauben zu montieren, welche automatisch und für die Aufnahme im Schrauberkopf lagerichtig ausgerichtet aus einem ungeordneten Vorrat zugeführt werden müssen. Für das Vereinzeln und lagerichtige Austragen von Schrauben aus dem ungeordneten Vorrat auf eine zu dem zu beschickenden Werkzeug führenden Fördereinrichtung - beispielsweise eine gleichzeitig als Pufferstecke dienende Schrägrutsche - werden heute fast ausschließlich vibrationsgetriebene Systeme, z.B. Vibrationstöpfe verwendet, in welche die Schrauben eingeschüttet, durch den Vibrationsantrieb auf im Topf vorgesehene Transportbahnen überführt und zusätzliche geeignete Maßnahmen in die vorgesehene Lage ausgerichtet werden, um sie dann in der erforderlichen Ausrichtung auf den nachgeschalteten Förderer zu übergeben. Solche vibrationsgetriebenen Systeme erzeugen ständig einen monotonen Geräuschpegel, der im Laufe der Zeit als äußerst unangenehm und von empfindlichen Personen sogar als unerträglich empfunden wird. Hinzu kommt, daß bei den bekannten Vibrationstöpfen die Vereinzelungsleistung beschränkt ist, so daß es erforderlich werden kann, zwei oder mehrere solcher Töpfe vorzusehen, wenn beim Einsatz von Hochleistungsschraubern mit mehreren Schraubenköpfen oder bei der Beschickung mehrerer Schrauber aus dem gleichen Vorrat größere Mengen von Schrauben in kurzen Intervallen zugeführt werden müssen. Der Lärmpegel steigt dann entsprechend. Bei Werkstücken mit spezieller Gewichtsverteilung -beispielsweise Kopfschrauben mit bereits vormontierter oder integrierter Unterlegscheibe - ist es auch schwierig, die vibrationsgetriebenen Systeme so auszugestalten, daß es nicht zu Störungen bei der Vereinzelung und Sortierung kommt.

Der Erfindung liegt daher die Aufgabe zugrunde, eine Vorrichtung zur Vereinzelung, Sortierung und lagerichtigen Weiterförderung von mit Köpfen versehenen bolzen- oder schaftförmigen Werkstücken zu schaffen, welche eine gegenüber den Vibrationssystemen erhöhte und auch bei den erwähnten problematischen Werstücken zuverlässige Funktion erbringt, wobei der montone Geräuschpegel der bekannten Systeme vermieden wird.

Erfindungsgemäß wird diese Aufgabe gelöst durch einen die Werkstücke in ungeordneter Schüttung aufnehmenden Vorratsbehälter mit in Abwärtsrichtung trichterartig geneigt verlaufenden Wänden, der an seiner tiefsten Stelle eine Durchlaßöffnung für die Werkstücke aufweist, eine unter dem Vorratsbehälter angeordnete Dosiereinrichtung, auf welche die aus der Durchlaßöffnung austretenden Werkstücke aufgegeben und mengendosiert zu einer Abgaberutsche weitergefördert werden, und durch eine unter der Abgaberutsche der Dosiereinrichtung angeordnete Sortiereinrichtung in Form einer langgestreckten rinnenartigen Sortierwanne mit seitlich gegenüberliegenden in Abwärtsrichtung schräg geneigt aufeinanderzulaufenden Wänden, welche an der Unterseite in einen von seitlich parallelen Wänden begrenzten Schlitz übergehen, dessen lichte Breite etwa gleich dem Durchmesser des bolzenförmigen Schafts der Werkstücke bzw. geringfügig breiter ist, und welche um eine quer zu ihrer Längserstreckung verlaufende Achse zwischen zwei gegensinnig - schräg geneigten Stellungen verschwenkbar ist, wobei der an seinem einen stirnseitigen Ende offen mündende Schlitz in der ersten Schwenkstellung fluchtend mit einer nachgeschalteten Förderrutsche ausgerichtet ist, auf welche die mit ihren Schäften in den Schlitz einsortierten Werkstücke übertreten. Bei der so aufgebauten Vorrichtung erfolgt die Vereinzelung der Werkstücke durch Austritt aus der Durchlaßöffnung des Vorratsbehälters auf die Dosiereinrichtung unter Schwerkrafteinfluß, wodurch der bei ständig laufenden Vibrationsantrieben entstehende Geräuschpegel von vornherein vermieden wird. Die lagerichtige Ausrichtung wird dann anschließend in der Sortierwanne durchgeführt, in welche die zuvor vereinzelten Kopfbolzen über die Abgaberutsche der Dosiereinrichtung abgeworfen werden. Mit dem Schaft voraus in die Sortierwanne abgeworfene Kopfbolzen rutschen dabei entlang der schräg geneigten Wände in eine Lage, in welcher ihre Schäfte zwischen den parallelen Wänden liegen, während der Kopf im unmittelbar anschließenden von den schrägen Wänden seitlich begrenzten Raum liegt. Diese Werkstücke haben bereits die lagerichtige Ausrichtung für den Übertritt auf die nachgeschaltete Förderrutsche. Mit dem Kopf voraus in die Sortierwanne abgeworfene Kopfbolzen müssen dagegen so gedreht werden, daß der Schaft zwischen die parallelen Wände eintritt. Dies geschieht durch Verschwenken der Sortierwanne, wobei die in der Sortierwanne enthaltenen Schrauben umgeschichtet werden, so daß zumindest ein Teil der Kopfbolzen in die korrekte, d.h. mit dem Schaft zwischen die parallelen Wände eingreifende Lage umgeschichtet wird. Durch mehrfaches Verschwenken können also alle Kopfbolzen ausgerichtet werden.

Der Vorratsbehälter ist zweckmäßig in senkrechter Höhenrichtung versetzbar und in wählbaren Höhenstellungen befestigbar an einem Ständer befestigt.

Um ein Verhaken der bolzenförmigen Werkstücke im Behälter und damit eine Behinderung des Austritts der bolzenförmigen Werkstücke aus der Durchlaßöffnung auf die Dosiereinrichtung zu verhindern, empfiehlt es sich, im Vorratsbehälter eine Einrichtung zur Lockerung der in ungeordneter Schüttung eingefüllten Werkstücke vorzusehen, welche beispielsweise so ausgebildet sein kann, daß sie eine durch eine druckmittelbetätigte Kolben-Zylinder-Einheit ver schwenkbar im Behälterinnern gelagerte Achse aufweist, von deren in die Nähe der Durchlaßöffnung geführtem freien Endbereich stab- oder bolzenförmige Lockerungselemente im wesentlichen radial vorstehen. Durch gelegentliche Betätigung der Kolben-Zylinder-Einheit werden die Lockerungselemente in der Werkstück-Schüttung verschwenkt und lösen so eventuelle Verhakungen.

In einer bevorzugten Weiterbildung der Erfindung ist auch die Dosiereinrichtung unterhalb des Vorratsbehälters in senkrechter Höhenrichtung verschiebbar und in wählbarem Höhenabstand von der Durchlaßöffnung befestigbar am Ständer angeordnet. Durch Veränderung des Abstandes der Dosiereinrichtung von der Durchlaßöffnung ist die Menge der auf die Dosiereinrichtung übertretenden bolzenförmigen Werkstücke in gewissem Umfange beeinflußbar.

Die Dosiereinrichtung selbst weist in einer bevorzugten Weiterbildung der Erfindung einen unterhalb der Durchlaßöffnung des Behälters angeordneten, schrittweise um eine senkrechte Achse drehantreibbaren Dosierkegel mit stumpfem Kegelwinkel auf, der von einer den größten Teil seines Basisumfangs umschließenden, nach oben vorstehenden Umfangswandung umgeben ist, welche nur in einem Umfangs-Teilbereich unterbrochen ist, wobei im unterbrochenen Teilbereich der Umfangswandung die Abgaberutsche für die Weiterführung der Werkstücke in die Sortiereinrichtung angeordnet ist.

Die Drehachse des Dosierkegels ist dabei zweckmäßig derart zur Durchlaßöffnung des Vorratsbehälters versetzt angeordnet, daß die aus dem Vorratsbehälter austretenden Werkstücke auf einen dem unterbrochenen Teilabschnitt der Umfangswandung abgewandten Bereich der Kegelmantelwandung des Dosierkegels übertreten. Durch Drehantrieb des dosierkegels werden die aus dem Vorratsbehälter auf die Mantelwandung des Dosierkegels abgeworfenen Werkstücke dann mit genommen und bei Erreichen des unterbrochenen Teilabschnitts der Umfangswandung in die Sortierwanne der Sortiereinrichtung abgegeben. Durch entsprechende Steuerung der Drehbewegung des Dosierkegels ist die Menge der in die Sortiereinrichtung überführten Werkstücke einstellbar.

Für einen schrittweisen Drehantrieb des Dosierkegels ist in einer bevorzugten Ausführungsform der Erfindung eine druckmittelbetätigte Kolben-Zylinder-Einheit vorgesehen, welche an einem verschwenkbaren Ende eines an seinem anderen Ende über ein Klinkengesperre mit der Drehachse des Dosierkegels gekoppelten Hebelarms angreift. Die Menge der mittels der Dosiereinrichtung in die nachgeschaltete Sortiereinrichtung überführten Werkstücke läßt sich also durch Änderung der Frequenz der Betätigung der Kolben-Zylinder-Einheit beeinflussen.

Die Sortiereinrichtung ist in einer bevorzugten Ausführungsform der Erfindung so ausgebildet, daß die stirnseitigen Enden der rinnenartigen Sortierwanne durch jeweils eine im Bereich der schräg geneigten Wände vorgesehene Querwand abgeschlossen sind, von denen die an dem der nachgeschalteten Förderrutsche zugewandten Ende vorgesehene Querwand in ihrem unteren, den parallelen Wänden zugekehrten Bereich um das Maß der Höhe der Köpfe der zu sortierenden Werkstücke weggeschnitten ist, so daß an diesem Ende korrekt mit dem Schaft in den Schlitz zwischen den parallelen Wänden eingreifende Werkstücke mit den Köpfen gerade durch den weggeschnittenen Bereich unter der Querwand hindurchzutreten vermögen.

Für den Schwenkantrieb der Sortierwanne ist auch in diesem Falle zweckmäßig eine mit Abstand von der Schwenkachse an der Sortierwanne angreifende druckmittelbeaufschlagbare Kolben-Zylinder-Einheit vorgesehen.

Dabei ist die Ausgestaltung zweckmäßig so getroffen, daß die Kolben-Zylinder-Einheit sortierwannenseitig an einem in dem der nachgeschalteten Förderrutsche zugewandten Bereich zwischen die parallelen Wände in den Schlitz eingreifenden und relativ zu diesen verschiebbaren Schwert angreift, welches normalerweise von einer an der Sortierwanne einerseits und dem Schwert andererseits vorgesehenen Feder in eine weitgehend aus dem Schlitzinnern zurückgezogene Stellung vorgespannt ist, in welcher die Schäfte der Werkstücke vollständig in den Schlitz einzutreten vermögen, wobei die Vorspannung der Feder so bemessen ist, daß bei Betätigung der Kolben-Zylinder-Einheit zunächst die Sortierwanne aus ihrer ersten, mit der nachgeschalteten Förderrutsche ausgerichteten Schwenkstellung in die andere Schwenkstellung verschwenkt und dann das Schwert entgegen der von der Feder ausgeübten Vorspannung weiter zwischen den parallelen Wänden hindurch bis in den zwischen den schräg geneigten Wänden gebildeten Raum der Sortierwann eingeschoben wird. Dieses Schwert tritt also erst nach der Verschwenkung der Sortierwanne weiter in den Schlitz zwischen den parallelen Wänden ein, so daß als zunächst die lose zwischen den schräg geneigten Wänden liegenden Werkstücke durch die Verschwenkbewegung umsortiert werden, wobei sie zum Teil mit den Schäften voraus in den zwischen den parallelen Wänden gebildeten Schlitz eingreifende für die Weiterförderung erforderliche Lage ausgerichtet werden. Durch das erst nach dem Verschwenken in einem Teilbereich des Schlitzes wirksam werdende Schwert werden in diesem Teilbereich etwa im Schlitz verklemmte Werkstücke in den oberen Teil der Sortierwanne zurückgedrückt, so daß die bei der vorausgehenden Schwenkbewegung der Wanne lagerichtig einsortierten Werkstücke dann nach Zurückschwenken in die erste Schwenkstellung ohne Schwierigkeiten auf die nachgeschaltete Förderrutsche übertreten können.

Das Schwert ist vorzugsweise an einem Ende verschwenkbar auf der auch die Sortierwanne verschwenkbar lagernde querverlaufenden Achse gelagert.

Die beiden Schwenkstellungen der Sortierwanne sind zweckmäßig durch Endanschläge festgelegt, an denen die Sortierwanne in den Schwenk-Endstellungen zur Anlage kommt, wobei es sich empfiehlt, im in der zweiten Schwenk-Endlange befindlichen förderrutschenabgewandten Endbereich der Sortierwanne einen das Vorhanden- bzw. Nichtvorhandensein eines Werkstücks in diesem Endbereich abtastenden Sensor vorzusehen. Dieser Sensor kann dann als Auslöser für die Betätigung der Dosiereinrichtung dienen, indem er eine Drehung des Dosierkegels auslöst, wenn in der Sortierwanne selbst keine Werstücke mehr vorhanden sind.

Die druckmittelbeaufschlagbaren Kolben-Zylinder-Einheiten werden zweckmäßig von jeweils einem mit Druckluft beaufschlagbaren Pneumatikzylinder gebildet.

Die Erfindung ist in der folgenden Beschreibung eines ' 'sführungsbeispiels in der Verbindung mit der Zeichnung näher erläutert, und zwar zeigt:

Fig. 1 eine teilweise geschnittene Seitenansicht eines Ausführungsbeispiels der erfindungsgemäßen Vorrichtung zur Vereinzelung, Sortierung und lagerichtigen Weiterförderung von Kopfbolzen; und

Fig. 2 eine Ansicht der Vorrichtung, gesehen in Richtung des Pfeils 2 in Fig. 1.

Das in den Zeichnungsfiguren gezeigte, in seiner Gesamtheit mit 10 bezeichnete Ausführungsbeispiel der erfindungsgemäßen Vorrichtung zur Vereinzelung, Sortierung und lagerichtigen Weiterförderung von mit Köpfen versehenen bolzen- oder schaftförmigen Werkstücken weist insgesamt drei aufeinanderfolgend wirksam werdende Funktions- oder Baugruppen auf, nämlich einen Vorratsbehälter 12, einer Dosiereinrichtung 14 und eine Sortiereinrichtung 16, von denen der Vorratsbehälter 12 und die Dosiereinrichtung übereinander an einer Standsäule 18 angeordnet sind, und zwar derart, daß sowohl der über der Dosiereinrichtung angeordnete Vorratsbehälter als auch die Dosiereinrichtung in Höhenrichtung verstellbar und in wählbaren Höhenstellungen an der Standsäule befestigbar sind. Die Standsäule 18 ihrerseits ist auf einer Grundplatte 20 befestigt, welche in einigem Abstand von der Standsäule auch die Sortiereinrichtung 16 trägt.

Der Vorratsbehälter 12 hat die Form eines an seiner Oberseite offenen und sich in Richtung zur Bodenseite verjüngenden Troges, dessen beide seitlichen Wände 22 und dessen Vorderwand 24 derart schräg geneigt sind, daß in die offene Oberseite lose eingeschüttete Werkstücke, z.B. Kopfschrauben, zum tiefsten Punkt rutschen. Lediglich die Rückwand 26 ist senkrecht angeordnet, um sie mit Spannschellen 28 od.dgl. in der gewünschten Höhe an der Standsäule 18 befestigen zu können. Im tiefsten Punkt der zusammentreffenden Seitenwände 22, der Vorderwand 24 und der Rückwand 26 ist eine Durchlaßöffnung 30 ausgebildet, durch welche die Werkstücke auf die darunter angeordnete - im Nachstehenden noch näher beschriebene - Dosiereinrichtung 14 hindurchtreten können. Die auf die Dosiereinrichtung hindurchgetretenen Werkstücke bilden einen Schüttkegel, welcher die Werkstücke zurückstaut, so daß weitere Werkstücke nur dann durch die Durchlaßöffnung 30 aus dem Vorratsbehälter 12 nachrutschen können, wenn zuvor im Schüttkegel befindliche Werkstücke weitergefördert worden sind.

Im Innern des Vorratsbehälters 12, und zwar im gezeigten Fall auf der Innenfläche der Vorderwand 24, ist eine Einrichtung 32 zur Lockerung der im Vorratsbehälter enthalte nen Werkstück-Schüttung vorgesehen, welche von einer in der Fallinie der Vorderwand und parallel zu deren Innenfläche verlaufenden schwenkbar gelagerten Achse 34 gebildet wird, in deren bis in die Nähe der Durchlaßöffnung 30 geführtes unteres Ende eine Anzahl von Gewindebolzen oder Schrauben 36 radial eingeschraubt sind, welche bei einer Verschwenkung die Werkstück-Schüttung Durchlockern, so daß im Bereich der Durchlaßöffnung 30 entstandene Stockungen des Durchtritts infolge von Verhakungen der Werkstücke behoben werden können. Am entgegengesetzten, d.h. dem oberen Ende, ist an der Achse 34 ein Hebelarm 38 rechtwinklig angesetzt, der durch einen zugeordneten Schlitz in der Vorderwand 24 hindurch greift. Am freien Ende dieses Hebelarms 38 greift die Kolbenstange eine von einem Druckluftzylinder 40 gebildeten Kolben-Zylinder-Einheit an, deren kolbenstangenabgewandtes Zylindergehäuseende auf einem auf der Außenfläche der Vorderwand gehalterten Bolzen gelagert ist. Es ist ersichtlich, daß zur Lockerung von eventuell im Bereich der Durchlaßöffnung 30 verklemmten Werkstücken lediglich der Druckluftzylinder 40 einige Male so betätigt werden muß, daß die Achse hin- und hergeschwenkt wird. Die dabei in der Werkstück-Schüttung hin- und herbewegten Schrauben 36 lösen eventuell verhakte Werkstücke zuverlässig.

Die unter der Durchlaßöffnung 30 des Vorratsbehälters 12 angeordnete Dosiereinrichtung 14 weist einen auf einer höhenverstellbar an der Standsäule 18 befestigbaren Grundplatte 42 drehbar um seine Mittelachse gelagerten Dosierkegel 44 mit stumpfem Kegelwinkel auf, der innerhalb einer ihn in Höhenrichtung noch überragenden, von der Grundplatte 42 nach oben vorstehenden Umfangswandung 46 eingeschlossen ist. Die Umfangswandung verhindert das seitliche Herabfallen von im standsäulennahen Bereich aus der Durchlaßöffnung 30 auf die benachbarte Kegelmantelfläche des Dosierkegels 44 übergetretenen Werkstücken. An der dem Übertrittsbereich der Werkstücke gegenüberliegenden, d.h. von der Standsäule 18 abgewandten Bereich, ist die Umfangswandung 46 unterbrochen, und in diesem Bereich ist an der Grundplatte 42 eine schräg abwärts gerichtet Abgaberutsche 48 angesetzt. Der dosierte Transport von Werkstücken aus dem sich unter der Durchlaßöffnung 30 ausbildenden Schüttkegel zur Abgaberutsche 48 erfolgt durch einen Schrittantrieb der in der Grundplatte 42 gelagerten Drehachse 50 des Dosierkegels 44, und zwar wird dieser Schrittantrieb ebenfalls mittels einer von einem - nicht im einzelnen gezeigten - Druckluftzylinder gebildeten Kolben-Zylinder-Einheit verwirklicht, welche am freien End eines gleichachsig zur Drehachse des Dosierkegels unterhalb der Grundplatte 42 drehbar gelagerten Hebelarms 52 angreift, der über ein nicht im einzelnen gezeigtes, zur Verhinderung einer ungewollten Rückdrehung des Dosierkegels jedoch zweckmäßig verdoppeltes Klinkengesperre mit der Drehachse 50 gekoppelt ist. Beim Ausfahren der Kolbenstange des Druckluftzylinders wird der Hebelarm 52 also jeweils um einen gewissen Winkelbetrag verschwenkt und nimmt über die erste Sperrklinke des Klinkengesperres das mit der Drehachse 50 verbundene mit Gesperrzähnen versehene Sperrad um einen entsprechenden Winkel mit. Beim Zurückziehen der Kolbenstange ratscht die erste Sperrklinke über die zugeordneten Gesperrzähne, so daß das Sperrad und die mit diesem verbundene Drehachse nicht mit zurückgenommen werden. Der Dosierkegel 44 wird also bei jeder Hin- und Rückbetätigung des Druckluftzylinders um einen Winkelbetrag weitergedreht. In der Fallinie der Mantelfläche des Dosierkegels auf diesem vorgesehene - entweder gesondert aufgesetzte oder aus dem Kegelmaterial herausgearbeitete - Rippen gewährleisten dabei, daß bei jeder Drehung des Dosierkegels eine Anzahl von unmittelbar auf dem Dosierkegel aufruhenden Werkstücken aus dem unterhalb der Durchlaßöffnung 30 ausgebildeten Schüttkegel mitgenommen und dann - nach Erreichen der Abgaberutsche - durch den unterbrochenen Bereich der Umfangswandung 46 abgeworfen werden. Durch entsprechende Bemessung der Größe des Schrittwinkels bei jeder Betätigung des Druckluftzylinders und durch die Frequenz seiner Betätigung läßt sich die vom Schüttkegel zur Abgaberutsche mitgenommene Menge von Werkstücken verändern. d.h. dosieren.

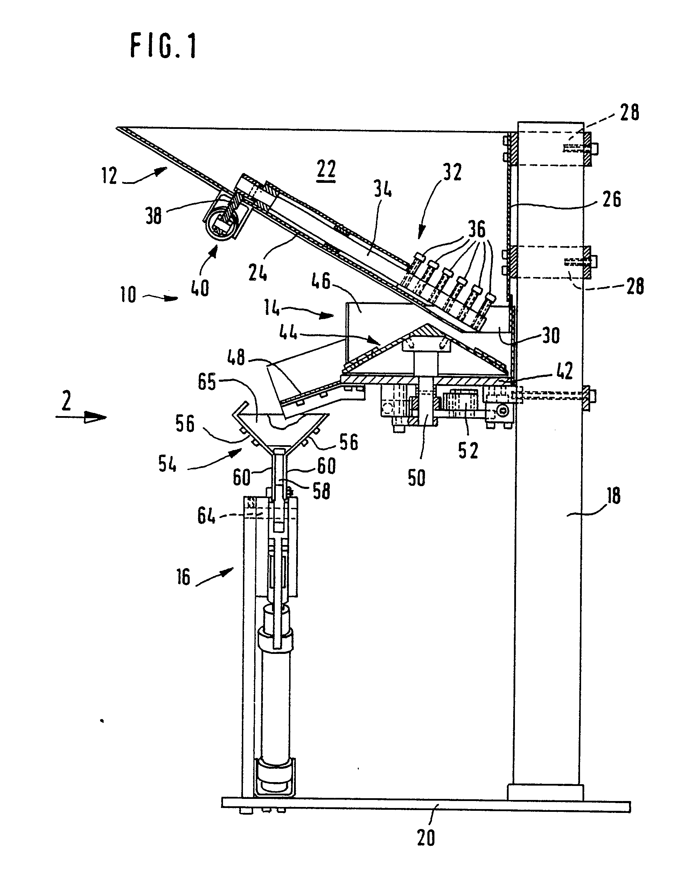

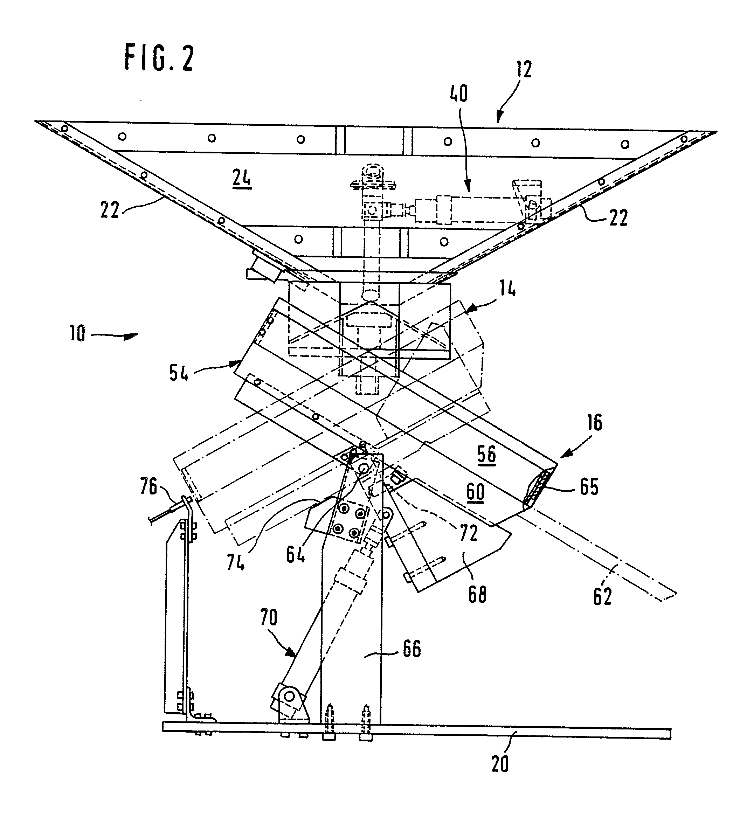

Die über die Abgaberutsche 48 aus der Dosiereinrichtung austretenden Werkstücke fallen - zunächst noch ungeordnet -in die Sortiereinrichtung 16, welche eine langgestreckte rinnenartige Sortierwanne 54 aufweist, die von seitlich gegenüberliegenden, von oben nach unten schräg aufeinanderzu geneigt verlaufenden Wänden 56 gebildet wird, die sich entlang ihrer unteren Begrenzungskanten also einander annähern und einen Schlitz 58 bilden, der von an die schräg geneigten Wände 56 anschließenden parallelen Wänden 60 begrenzt wird, und dessen zwischen den parallelen Wänden 60 gemessene lichte Breite etwa gleich dem Durchmesser der bolzenförmigen Schäfte der zu sortierenden Werkstücke bzw. geringfügig breiter ist, so daß in die Sortierwanne 54 abgeworfene Werkstücke mit dem Schaft voraus in den Schlitz 58 eintreten können, während ihr im Durchmesser größerer Kopf in jedem Falle innerhalb des von den schrägen Wänden 56 begrenzten Raums bleibt. Beim Abwerfen der Werkstücke ist allerdings nicht gewährleistet, daß alle in die Sortierwanne fallenden Werkstücke von vornherein in die mit dem Schaft voraus weisende Lage in die Sortierwanne abgeworfen werden. Ein Teil der Werkstücke wird deshalb auch ungeordnet zwischen den schräg geneigten seitlichen Wänden 56 liegen. Um alle Werkstücke in die mit dem Schaft vorausweisende, in den Schlitz 58 eingreifende Lage zu sortieren und die so sortierten Werkstücke dann aus dem Schlitz 58 in eine seitlich anschließende - in Fig. 2 nur schematisch strichpunktiert angedeutete - Förderrutsche 62 weiterzuführen, ist die Sortierwanne etwa mittig unterhalb der Abgaberutsche 48 um eine quer zu ihrer Längserstreckung verlaufende Achse 64 zwischen zwei gegensinnig schräg geneigten Endstellungen verschwenkbar, von denen in Fig. 1 die erste Schwenk-Endstellung ausgezogen und die zweite entgegengesetzte Endstellung strichpunktiert dargestellt ist. In der ersten Schwenk-Endstellung schließt die Förderrutsche 62 unmittelbar an den im Bereich der parallelen Wände 60 an diesem Ende offenen Schlitz 58 an, so daß lagerichtig, d.h. mit den Schäften voran in den Schlitz einsortierte Werkstücke in die Förderrutsche 62 übertreten können. Die die Sortierwanne 54 an diesem Ende verschließende Querwand 65 ist an ihrem unteren Ende deshalb auch so weit weggeschnitten daß der Kopf der lagerichtig in den Schlitz 68 eingreifenden Werkstücke gerade noch durch den weggeschnittenen Bereich hindurchtreten kann. Über die - zweckmäßig gleichzeitig als Pufferstrecke ausgebildete Förderrutsche können die bolzenförmigen Werkstücke dann lagerichtig den nachgeschalteten Verarbeitungswerkzeugen oder -stationen zugeführt werden. Der die Schwenkachse für die Sortierwanne 54 bildende Bolzen ist im oberen gegabelten und seitlich verkröpften Ende einer auf der Grundplatte 20 befestigten senkrechten Stütze 66 gehaltert und lagert seinerseits - neben der Sortierwanne - innerhalb der Gabelung auch ein segmentförmiges Schwert 68, welches durch eine einerseits am Schwert und andererseits an der Sortierwanne abgestützte, vorgespannte Feder in eine Lage vorgespannt ist, in welcher seine eine Kante gerade zwischen die parallelen Wände 60 eingreift. Mit Abstand von der Schwenkachse 64 greift am Schwert das freie Ende der Kolbenstange einer wiederum als Druckluftzylinder 70 ausgebildeten Kolben-Zylinder-Einheit an, die andererseits in einer auf der Grundplatte 20 befestigten Konsole gehalten ist. Bei Betätigung des Druckluftzylinders 70 drückt die dann ausfahrende Kolbenstange zunächst das Schwert 68 und über die zwischen dem Schwert und der Sortierwanne vorgesehene vorgespannte Feder 72 die Sortierwanne in die zweite, in Fig. 2 strichpunktiert dargestellte Schwenk-Endstellung. Die Vorspannung der Feder 72 ist dabei so eingestellt, daß zunächst die Sortierwanne verschwenkt wird, ohne daß das Schwert 68 tiefer in den Schlitz 58 eintritt. Erst dann, wenn die Sortierwanne in der zweiten Schwenk-Endstellung an einem Anschlag 74 zur Anlage kommt, schiebt die weiter ausfahrende Kolbenstange des Druckluftzylinders 70 ʹˡˢ Schwert zwischen die parallelen Wände 60 ın den Schlitz 58. Gegebenenfalls mit dem Schaft im Schlitz 58 befindliche und eventuell sogar durch darüberliegende oder nur teilweise in den Schlitz eingreifende Werstücke verklemmte Werkstücke werden dabei vom Schwert 68 in den oberen Teil der Sortierwanne 54 zurückgeschoben und fallen dann - entsprechend der gegensinnigen Neigung der Sortierwanne in der zweiten Endstellung in das förderrutschenabgewandte Ende der Sortierwanne. Neben den bereits zuvor bei der verschwenkten mit den Schäften zwischen die parallelen Wände 60 eingetretenen Werkstücke wird dann auch noch ein Teil der vom Schwert zwischen den parallelen Wänden 60 herausgedrückten Werkstücke lagerichtig in den Schlitz 58 einsortiert. Bei Zurückfahren der Kolbenstange des Druckluftzylinders 70 wird zunächst von der Feder 72 das Schwert zwischen den parallelen Wänden 60 herausgeschwenkt und dann die Sortierwanne 54 insgesamt in die erste Schwenk-Endstellung zurückgeführt. Alle dann mit ihren Schäften lagerichtig zwischen die parallelen Wände 60 einsortierten Werkstücke rutschen dann entlang des Schlitzes 58 zwischen den Wänden 60 hindurch auf die Förderrutsche 62. Durch mehrmaliges Hin- und Herschwenken der Sortierwanne 54 können alle von der Dosiereinrichtung 14 in die Sortierwanne 54 abgeworfenen Werkstücke in die korrekte Lage sortiert und lagerichtig ausgegeben werden.

In Fig. 2 ist noch ein in der zweiten Schwenk-Endstellung in unmittelbarer Nähe der förderrutschenabgewandten Querwand 65 gehalterter Sensor 76 gezeigt, der das Vorhandensein bzw. Nichtvorhandensein von Werkstücken in der Sortierwanne 54 abtastet. Sobald der Sensor 76 das Nichtvorhandensein von Werkstücken in der zweiten Schwenk-Endstellung feststellt, entwickelt er über eine - nicht gezeigte -Steuereinheit ein Betätigungssignal für die die Dosiereinrichtung 14 - schrittweise drehantreibende Kolben-Zylinder bene Mengen von Werkstücken über die Abgaberutsche 48 in die Sortierwanne abwirft.

Es hat sich gezeigt, daß eine entsprechend dem vorstehend beschriebenen Ausführungsbeispiel ausgestaltete Vorrichtung 10 zur Vereinzelung, Sortierung und lagerichtigen Weiterförderung von Kopfbolzen nich nur erheblich geringere Geräusch verursacht als die bekannten, mit Vibrationsantrieb arbeitenden Vorrichtungen, sonder daß sie überraschenderweise auch eine deutlich erhöhte Vereinzelungs und Sortierleistung erbringt, obwohl sie absatz- bzw. schrittweise arbeitet.

**Ansprüche**

1. Vorrichtung zur Vereinzelung, Sortierung und lagerichtigen Weiterförderung von mit Köpfen versehenen bolzen- oder schaftförmigen Werkstücken, **gekennzeichnet durch** einen die Werkstücke in ungeordneter Schüttung aufnehmenden Vorratsbehälter (12) mit in Abwärtsrichtung trichterartig geneigt verlaufenden Wänden (22; 24), der an seiner tiefsten Stelle eine Durchlaßöffnung (30) für die Werkstücke aufweist, eine unter dem Vorratsbehälter angeordnete Dosiereinrichtung (14), auf welche die aus der Durchlaßöffnung (30) austretenden Werkstücke aufgegeben und mengendosiert zu einer Abgaberutsche (48) weitergefördert werden, und durch eine unter der Abgaberutsche (48) der Dosiereinrichtung (14) angeordnete Sortiereinrichtung (16) in Form einer langgestreckten rinnenartigen Sortierwanne (54) mit seitlich gegenüberliegenden in Abwärtsrichtung - schräg geneigt aufeinanderzulaufenden Wänden (56), welche an der Unterseite in einen von seitlich parallelen Wänden (60) begrenzten Schlitz (58) übergehen, dessen lichte Breite etwa gleich dem Durchmesser des bolzenförmigen Schafts der Werkstücke bzw. geringfügig breiter ist, und welche um eine quer zu ihrer Längserstreckung verlaufende Achse (64) zwischen zwei gegensinnig schräg geneigten Stellungen verschwenkbar ist, wobei der an seinem einen stirnseitigen Ende offen mündende Schlitz (58) in der ersten Schwenkstellung fluchtend mit einer nachgeschalteten Förderrutsche (62) ausgerichtet ist, auf welche die mit ihren Schäften in den Schlitz (58) einsortierten Werkstücke übertreten.

2. Vorrichtung nach Anspruch 1, dadurch gekennzeichnet, daß der Vorratsbehälter (12) in senkrechter Höhenrichtung versetzbar und in wählbaren Höhenstellungen befestigbar an einem Ständer (18) angeordnet ist.

3. Vorrichtung nach Anspruch 2, dadurch gekennzeichnet, daß im Vorratsbehälter (12) eine Einrichtung (32) zur Lockerung der in ungeordneter Schüttung eingefüllten Werkstücke vorgesehen ist.

4. Vorrichtung nach Anspruch 3, dadurch gekennzeichnet, daß die Lockerungseinrichtung (32) eine durch eine druckmittelbetätigte Kolben-Zylinder-Einheit (40) verschwenkbar im Behälterinnern gelagerte Achse (34) aufweist, von deren in die Nähe der Durchlaßöffnung (30) geführtem freien Endbereich stab- oder bolzenförmige Lockerungselemente (36) im wesentlichen radial vorstehen.

5. Vorrichtung nach einem der Ansprüche 2 bis 4, dadurch gekennzeichnet, daß die Dosiereinrichtung (14) unterhalb des Vorratsbehälters (12) in senkrechter Höhenrichtung verschiebbar und in wählbarem Höhenabstand von der Durchlaßöffnung (30) befestigbar am Ständer (18) angeordnet ist.

6. Vorrichtung nach einem der Ansprüche 1 bis 5, dadurch gekennzeichnet, daß die Dosiereinrichtung (14) einen unterhalb der Durchlaßöffnung (30) des Behälters (12) angeordneten, schrittweise um eine senkrechte Achse (50) drehantreibbaren Dosierkegel (44) mit stumpfem Kegelwinkel aufweist, der von einer den größten Teil seines Basisumfangs umschließenden, nach oben vorstehenden Umfangswandung (46) umgeben ist, die nur in einem Umfangs-Teilbereich unterbrochen ist, und daß die Abgaberutsche (48) im unterbrochenen Teilbereich der Umfangswandung (46) angeordnet ist.

7. Vorrichtung nach Anspruch 5 und 6, dadurch gekennzeichnet, daß die Drehachse (50) des Dosierkegels (44) derart zur Durchlaßöffnung (30) versetzt angeordnet ist, daß die aus dem Vorratsbehälter (12) austretenden Werkstücke auf einen dem unterbrochenen Teilabschnitt der Umfangswandung (46) abgewandten Bereich der Kegelmantelwandung des Dosierkegels (44) übertreten.

8. Vorrichtung nach Anspruch 6 oder 7, dadurch gekennzeichnet, daß für den schrittweisen Drehantrieb des Dosierkegels (44) eine druckmittelbetätigte Kolben-Zylinder-Einheit vorgesehen ist, welche an einem verschwenkbaren Ende eines an seinem anderen Ende über ein Klinkengesperre mit der Drehachse (50) des Dosierkegels (44) gekoppelten Hebelarms (52) angreift.

9. Vorrichtung nach einem der Ansprüche 1 bis 8, dadurch gekennzeichnet, daß die stirnseitigen Enden der rinnenartigen Sortierwanne (54) durch jeweils eine im Bereich der schräg geneigten Wände (56) vorgesehene Querwand (65) abgeschlossen sind, von denen die an dem der nachgeschalteten Förderrutsche (62) zugewandten Ende vorgesehene Querwand (65) in ihrem unteren, den parallelen Wänden (60) zugekehrten Bereich um das Maß der Höhe der Köpfe der zu sortierenden Werkstücke weggeschnitten ist, so daß an diesem Ende korrekt mit dem Schaft in den Schlitz (58) zwischen den parallelen Wänden (60) eingreifende Werkstücke mit denKöpfen gerade durch den weggeschnittenen Bereich unter der Querwand (65) hindurchzutreten vermögen.

10. Vorrichtung nach einem der Ansprüche 1 bis 9, gekennzeichnet durch eine mit Abstand von der Schwenkachse (64) an der Sortierwanne (54) angreifende druckmittelbeaufschlagbare Kolben-Zylinder-Einheit (70).

11. Vorrichtung nach Anspruch 10, dadurch gekennzeichnet, daß die Kolben-Zylinder-Einheit (70) sortierwannenseitig an einem in dem der nachgeschalteten Förderrutsche (62) zugewandten Bereich zwischen die parallelen Wände (60) in den Schlitz (58) eingreifenden und relativ zu diesen verschiebbaren Schwert (68) angreift, welches normalerweise von einer an der Sortierwanne (54) einerseits und dem Schwert (68) andererseits vorgesehenen Feder (72) in eine weitgehend aus dem Schlitzinnern zurückgezogene Stellung vorgespannt ist, in welcher die Schäfte der Werkstücke vollständig in den Schlitz (58) einzutreten vermögen, wobei die Vorspannung der Feder (72) so bemessen ist, daß bei Betätigung der Kolben-Zylinder-Einheit (70) zunächst die Sortierwanne ((54) aus ihrer ersten, mit der nachgeschalteten Förderrutsche (62) ausgerichteten Schwenkstellung in die andere Schwenkstellung verschwenkt und dann das Schwert (68) entgegen der von der Feder (72) ausgeübten Vorspannung weiter zwischen den parallelen Wänden (60) hindurch bis in den zwischen den schräg geneigten Wänden (56) gebildeten Raum der Sortierwanne (54) eingeschoben wird.

12. Vorrichtung nach Anspruch 11, dadurch gekennzeichnet, daß das Schwert (68) an einem Ende verschwenkbar auf der auch die Sortierwanne (54) verschwenkbar lagernden querverlaufenden Achse (64) gelagert ist.

13. Vorrichtung nach einem der Ansprüche 1 bis 12, gekennzeichnet durch Endanschläge, an denen die Sortierwanne (54) in den beiden Schwenk-Endstellungen zur Anlage kommt, und durch einen im in der zweiten Schwenk-Endlage befindlichen, förderrutschenabgewandten Endbereich der Sortierwanne (54) vorgesehenen, das Vorhanden- bzw. Nichtvorhandensein eines Werkstücks in diesem Endbereich abtastenden Sensor (76).

14. Vorrichtung nach einem oder mehreren der Ansprüche 4, 8 und 10, dadurch gekennzeichnet, daß die druckmittelbeaufschlagbare Kolben-Zylinder-Einheit (40; 70) jeweils wenigstens ein mit Druckluft beaufschlagbarer Pneumatikzylinder ist.

# FIG.1

# FIG.2